# EUROPÄISCHE PATENTSCHRIFT

(11) **EP 1 900 829 B1**
(45) Veröffentlichungstag und Bekanntmachung des Hinweises auf die Patenterteilung: **31.12.2008**
(21) Anmeldenummer: 07010316.3
(22) Anmeldetag: 24.05.2007
(51) Int. Cl.: C21D 1/42, C21D 8/02, C21D 8/04, B21B 1/22, B21D 1/00, B21D 25/00

(54) **Verfahren und Vorrichtung zum Vergüten von Stahlbändern**
Process and device for tempering steel strips
Procédé et dispositif de revenu de feuillards d'acier

(30) Priorität: 11.09.2006 DE 102006042569
(43) Veröffentlichungstag der Anmeldung: 19.03.2008
(73) Patentinhaber: Hugo Vogelsang GmbH & Co. KG, 58119 Hagen (DE)
(72) Erfinder: Kager, Udo, 58579 Schalksmühle (DE); Horn, Rüdiger, 58099 Hagen (DE); Heckermann, Hartmut, 58119 Hagen (DE)
(74) Vertreter: Köchling, Conrad-Joachim

(56) Entgegenhaltungen:
- EP-A- 0 591 589
- DE-C- 534 296
- GB-A- 218 822
- GB-A- 1 154 422
- JP-A- 52 009 610
- JP-A- 2003 013 133

## Beschreibung

Die Erfindung betrifft ein Verfahren zum Vergüten von Stahlbändern im Durchlauf, wobei das Bandmaterial zum Härten auf eine Härtetemperatur erwärmt, anschließend abgeschreckt, nachfolgend mechanisch unter gleichzeitiger Erwärmung glattgebügelt, sowie auf Anlasstemperatur erwärmt wird, sowie eine Vorrichtung zur Durchführung des Verfahrens gemäß Oberbegriff des Anspruches 7.

Ein Vergütungsverfahren herkömmlicher Art ist beispielsweise in der WO00/39349 beschrieben. In dieser Druckschrift ist ebenso eine Anlage zum Vergüten von Stahlbändern gezeigt und erläutert. Auf diese Erläuterung wird Bezug genommen. Eine solche Vergütungsanlage weist beispielsweise eine Abwickelgruppe für das üblicherweise auf Coils aufgerollte Stahlband, eine Richteinrichtung zum Richten des abrollenden Stahlbandes und eine Schweißmaschine zum Aneinanderschweißen von aufeinander folgend auf die Abwickelgruppe aufgesetzten Stahlbandwickeln auf. Ferner weist sie einen Treiber zum Abziehen des Stahlbandes von dem Coil, eine Schlingengrube, einen Härteofen, ein Metallkühlbad, einen Luftkühler, einen Anlassofen, einen Schutzgaskühler, ein Durchziehgerüst zum Durchziehen des Stahlbandes, eine Schere zum Trennen des Stahlbandes und eine Aufwickelgruppe zum Aufwickeln des Stahlbandes auf.

Im Stand der Technik ist es zusätzlich bekannt, in Laufrichtung des Stahlbandes zwischen dem Luftkühler und dem Anlassofen eine Bügelvorrichtung beispielsweise in Form eines Bügelofens zu integrieren, um Verwerfungen und dergleichen Verformungen des Stahlbandes zu beseitigen. Herkömmlich wird in einem solchen Bügelofen das Stahlband indirekt auf Temperaturen zwischen 400 und 600° C, je nach Analyse des Stahlbandes, langsam erwärmt. Während dieses indirekten Erwärmungsvorganges wird das Stahlband zwischen Oberplatten und Unterplatten der Bügelvorrichtung durchgezogen, wobei üblicherweise die Unterplatte stationär gehalten ist, während die Oberplatten mittels geeigneter Stellglieder in Richtung auf die Unterplatte bewegt werden und gegen das Stahlband angedrückt werden kann. Mit diesem Vorgang, der auch als Glattbügeln bezeichnet wird, können Verwerfungen und Spannungen des Stahlbandes beseitig beziehungsweise abgebaut werden.

Aus der GB-A- 1154422 ist es bekannt, Stahlbänder im Durchlaufverfahren zu vergüten, wobei diese mechanisch plangerichtet und glattgebügelt werden.

Aus der GB 218822 A sowie aus der EP-A- 0591589 ist es bekannt, die beiden Vorgänge des Glattrichtens beziehungsweise Planrichtens und des Anlassens ohne Zeitverzögerung zu realisieren.

Ausgehend von diesem Stand der Technik liegt der Erfindung die Aufgabe zugrunde, ein Verfahren gattungsgemäßer Art zu schaffen, mit dem eine Verbesserung der Planizität des Stahlbandes erreicht wird, wobei zudem der Spannungsabbau verbessert und das Stahlband gegen mechanische Beschädigungen geschützt werden soll.

Zur Lösung dieser Aufgabe schlägt die Erfindung vor, dass während des Glattbügelns das Bandmaterial schnell auf die Anlasstemperatur erwärmt wird und im Anschluss an das Glattbügeln auf Anlasstemperatur gehalten sowie nachfolgend endgültig abgekühlt wird, und dass während des Glattbügelns die Oberfläche des Stahlbandes zum Schutz gegen mechanische Beschädigung mit einem Schutzbelag abgedeckt wird.

Erfindungsgemäß ist dem Bügelvorgang ein Anlassvorgang überlagert, so dass die zum Bügeln und insbesondere zum Planrichten des Bandes notwendigen Ausscheidungsvorgängen im Gefüge, wobei tetragonaler Martensit unter Temperatureinfluss zu kubischem Martensit transformiert wird, fast ohne Zeitverzögerung freigesetzt werden. Der Abbau der Spannungen setzt direkt ein. Unterstützend wirkt die ebenfalls im Bügelbereich abgeschlossene Umwandlung des Restaustensits in kubischen Martensit. Die Vergleichmäßigung im Gefüge findet somit idealerweise schon im Bügelbereich statt.

Durch das Verfahren werden Planlageabweichungen über die Breite von weniger als 0,05 % der Bandbreite angestrebt sowie eine gleichmäßige Bogenbildung der Abweichung.

Zudem wird das Stellband gegen mechanische Beschädigungen geschützt.

Bevorzugt ist zudem vorgesehen, dass das Bandmaterial während des Glattbügelns mit einem Aufheizgradienten von mindestens 500 K/s auf Anlasstemperatur aufgeheizt wird.

Auf diese Weise wird das Bandmaterial direkt und gezielt mit einem Aufheizgradienten von mindestens 500 K/s auf Anlasstemperatur aufgeheizt und bei dieser Temperatur gebügelt.

Vorzugsweise ist vorgesehen, dass das Bandmaterial während des Glattbügelns von oben und/oder unten aufgeheizt wird.

Insbesondere ist bevorzugt, dass die Aufheizung gezielt von der Ober- und Unterseite erfolgt.

Besonders bevorzugt ist vorgesehen, dass das Stahlband zu Beginn des Glattbügelns auf die Anlasstemperatur erwärmt und im weiteren Verlauf des Glattbügelns auf dieser Anlasstemperatur gehalten wird.

Auch kann vorgesehen sein, dass das Glattbügeln unter Schutzgasatmosphäre durchgeführt wird.

Um die gewünschte Erwärmung des Stahlbandes mit hohem Aufheizgradienten durchführen zu können, ist vorgesehen, dass die Erwärmung des Stahlbandes mittels induktiver Erwärmung erfolgt.

Eine bevorzugte Vorrichtung zur Durchführung des Verfahrens ist in Anspruch 7 angegeben.

Die untere Bügelplatte beziehungsweise die unteren Bügelplatten sind stationär gehalten, während die obere Bügelplatte oder die oberen Bügelplatten jeweils mittels Stellgliedern gegen die untere Bügelplatte verstellbar sind, so dass die oberen Bügelschuhe mit einem definierten Anpressdruck auf das Stahlband gedrückt werden können. Die Heizeinrichtungen sind nahe des Einlaufbereiches des Bandes an der Bügelplatte oder an den Bügelplatten vorgesehen.

Um das durchlaufende Stahlband gegen mechanische Beschädigungen zu schützen, ist vorgesehen, dass die Band- Kontaktflächen der Bügelplatten mit einem Schutzbelag versehen sind.

Dabei ist bevorzugt vorgesehen, dass der Schutzbelag aus einem temperaturfesten Gewebeband besteht.

Um einen kontinuierlichen Durchlauf des Schutzbelages gleichlaufend mit dem durchlaufenden Stahlband zu erreichen ist vorgesehen, dass endseitig der Bügelplatten jeweils einlaufseitig und auslaufseitig Wickelrollen gehaltert sind, von denen der Schutzbelag abwickelbar und auf die der Schutzbelag aufwickelbar ist.

Alternativ kann vorgesehen sein, dass endseitig der Bügelplatten jeweils einlaufseitig und auslaufseitig Umlenkrollen angeordnet sind, um die der Schutzbelag endlos umlaufend geführt ist.

Weitere vorteilhafte Merkmale sind in den Ansprüchen 11 und 12 angegeben.

Eine bevorzugte Vorrichtung zur Durchführung des Verfahrens ist in der Zeichnung dargestellt und im Folgenden näher beschrieben.

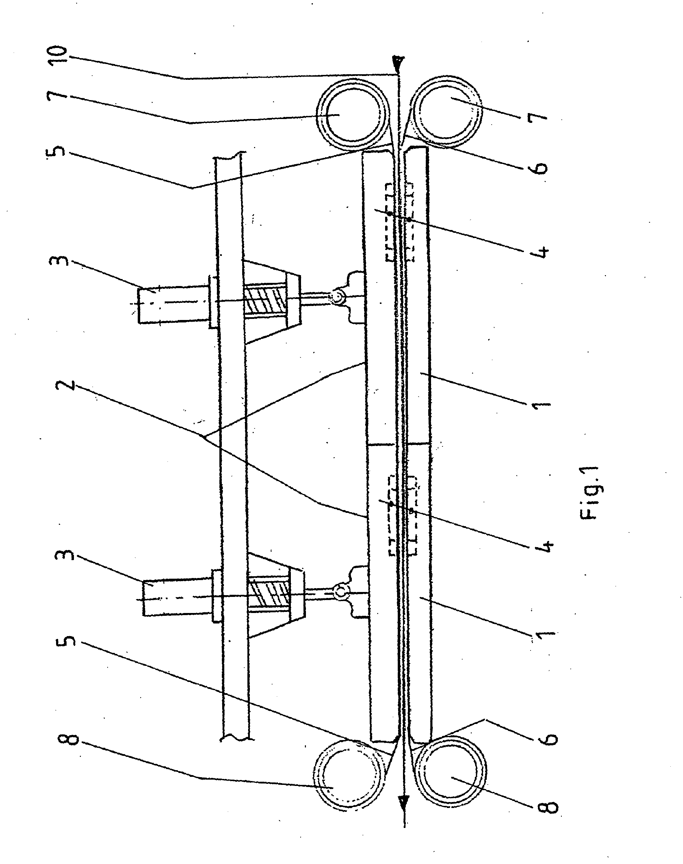

Die Figur 1 zeigt eine Bügelvorrichtung (schematisch) in Seitenansicht.

In der Zeichnung ist eine Bügelvorrichtung gezeigt. Ein Stahlband 10 wird in der durch die Pfeile angegebenen Richtung durch die Bügelvorrichtung gezogen. Dabei besteht die Bügelvorrichtung aus unteren stationären Bügelplatten 1 und oberen, vertikal verstellbaren Bügelplatten 2. Die Bügelplatten 2 sind mittels Arbeitszylindern 3 gegen das durchlaufende Band 10 anpressbar. In den Bügelplatten sind jeweils zu Beginn ihres Einlaufbereiches Heizeinrichtungen 4 in Form von Induktionsspulen angeordnet und zwar sowohl in den oberen Bügelplatten 2 als auch in den unteren Bügelplatten 1. Zusätzlich sind die Bandkontaktflächen der Bügelplatten 1,2 mit einem Schutzbelag 5,6 versehen, um die Oberfläche des durchlaufenden Stahlbandes 10 gegen mechanische Beschädigung zu schützen. Ein solcher Schutzbelag 5,6 besteht vorzugsweise aus einem temperaturfesten Gewebeband. Endseitig der Bügelplatten 1,2 sind jeweils einlaufseitig und auslaufseitig Wickelrollen 7 beziehungsweise 8 gehalten, von denen der Schutzbelag 5,6 abwickelbar und auf die der Schutzbelag 5,6 aufwickelbar ist. Zur Durchführung des erfindungsgemäßen Verfahrens wird die Bügelvorrichtung derart betrieben, dass das Stahlband 10 direkt und gezielt mit einem Aufheizgradienten von mindestens 500 K/s auf Anlasstemperatur aufgeheizt wird. Bei diesem Anlassvorgang werden die zum Bügeln, insbesondere Planrichten, des Stahlbandes 10 notwendigen Ausscheidungsvorgänge im Gefüge fast ohne Zeitverzögerung freigesetzt, wobei sich unter Temperatureinfluss tetragonaler Martensit zu kubischen Martensit. Die Vergleichmäßigung im Gefüge findet soweit idealerweise schon im Bügelbereich statt.

In dem anschließend an die Bügelvorrichtung beziehungsweise an den Bügelvorgang angeschlossenen Anlassofen wird das Bandmaterial, welches mit Anlasstemperatur die Bügelvorrichtung verlässt, auf Anlasstemperatur gehalten, bis es nach Verlassen des Anlassofens mittels der dann vorgesehenen Kühleinrichtung gekühlt wird, vorzugsweise unter Schutzgas auf eine Temperatur von etwa 100° C.

## Patentansprüche

1. Verfahren zum Vergüten von Stahlbändern im Durchlauf, wobei das Bandmaterial (10) zum Härten auf eine Härtetemperatur erwärmt, anschließend abgeschreckt, nachfolgend mechanisch unter gleichzeitiger Erwärmung glattgebügelt, sowie auf Anlasstemperatur erwärmt wird, **dadurch gekennzeichnet, dass** während des Glattbügelns das Bandmaterial (10) schnell auf die Anlasstemperatur erwärmt wird und im Anschluss an das Glattbügeln auf Anlasstemperatur gehalten sowie nachfolgend endgültig abgekühlt wird, und dass während des Glattbügelns die Oberfläche des Stahlbandes (10) zum Schutz gegen mechanische Beschädigung mit einem Schutzbelag (5,6) abgedeckt wird.

2. Verfahren nach Anspruch 1, **dadurch gekennzeichnet, dass** das Bandmaterial (10) während des Glattbügelns mit einem Aufheizgradienten von mindestens 500 K/s auf Anlasstemperatur aufgeheizt wird.

3. Verfahren nach einem der Ansprüche 1 oder 2, **dadurch gekennzeichnet, dass** das Bandmaterial (10) während des Glattbügelns von oben und/oder unten aufgeheizt wird.

4. Verfahren nach einem der Ansprüche 1 bis 3, **dadurch gekennzeichnet, dass** das Stahlband (10) zu Beginn des Glattbügelns auf die Anlasstemperatur erwärmt und im weiteren verlauf des Glattbügelns auf dieser Anlasstemperatur gehalten wird.

5. Verfahren nach einem der Ansprüche 1 bis 4, **dadurch gekennzeichnet, dass** das Glattbügeln unter Schutzgasatmosphäre durchgeführt wird.

6. Verfahren nach einem der Ansprüche 1 bis 5, **dadurch gekennzeichnet, dass** die Erwärmung des Stahlbandes (10) mittels induktiver Erwärmung erfolgt.

7. Vorrichtung zur Durchführung des Verfahrens nach einem der Ansprüche 1 bis 6, wobei eine Bügelvorrichtung mit einer unteren ein- oder mehrteiligen Bügelplatte (1) und einer oberen ein- oder mehrteiligen Bügelplatte (2) vorgesehen ist, die zwischen sich einen Durchlassspalt für das Stahlband (10) einschließen, die obere Bügelplatte (2) mittels mindestens eines Stellgliedes gegen die untere Bügelplatte (1) verstellbar ist, und in beiden Bügelplatten (1,2) und/oder in mehreren Teilen der mehrteiligen Bügelplatten (1,2) Heizeinrichtungen (4) angeordnet sind, **dadurch gekennzeichnet, dass** die BandKontaktflächen der Bügelplatten (1,2) mit einem Schutzbelag (5,6) versehen sind.

8. Vorrichtung nach Anspruch 7, **dadurch gekennzeichnet, dass** der Schutzbelag (5,6) aus einem temperaturfesten Gewebeband besteht.

9. Vorrichtung nach Anspruch 7 oder 8, **dadurch gekennzeichnet, dass** endseitig der Bügelplatten (1,2) jeweils einlaufseitig und auslaufseitig Wickelrollen (7,8) gehaltert sind, von denen der Schutzbelag (5,6) abwickelbar und auf die der Schutzbelag (5,6) aufwickelbar ist.

10. Vorrichtung nach Anspruch 9, **dadurch gekennzeichnet, dass** endseitig der Bügelplatten (1,2) jeweils einlaufseitig und auslaufseitig Umlenkrollen angeordnet sind, um die der Schutzbelag (5,6) endlos umlaufend geführt ist.

11. Vorrichtung nach einem der Ansprüche 7 bis 10, **dadurch gekennzeichnet, dass** das Stellglied ein Arbeitszylinder (3) ist.

12. Vorrichtung nach einem der Ansprüche 7 bis 11, **dadurch gekennzeichnet, dass** als Heizeinrichtungen (4) Induktionsspulen vorgesehen sind.

## Claims

1. Method for tempering steel strips in a continuous process, wherein the strip material (10) is heated for hardening purposes to a hardening temperature, then quenched and thereafter pressed mechanically with simultaneous heating, and heated to the tempering temperature, **characterised in that**, during the pressing, the strip material (10) is quickly heated to the tempering temperature and after the pressing is held at the tempering temperature and then is finally cooled, and **in that**, during the pressing, the surface of the steel strip (10) is covered with a protective cover (5, 6) in order to protect it against mechanical damage.

2. Method according to claim 1, **characterised in that**, during the pressing, the strip material (10) is heated to the tempering temperature with a heating gradient of at least 500 K/s.

3. Method according to one of claims 1 or 2, **characterised in that**, during the pressing, the strip material (10) is heated from above and/or below.

4. Method according to one of claims 1 to 3, **characterised in that** the steel strip (10) is heated to the tempering temperature at the start of pressing and is held at this tempering temperature in the further course of pressing.

5. Method according to one of claims 1 to 4, **characterised in that** the pressing is carried out under an inert gas atmosphere.

6. Method according to one of claims 1 to 5, **characterised in that** the heating of the steel strip (10) takes place by means of inductive heating.

7. Device for carrying out the method according to one of claims 1 to 6, wherein a pressing device is provided which comprises a lower pressing plate (1) in one or more parts and an upper pressing plate (2) in one or more parts, which between them enclose a gap for the steel strip (10), the upper pressing plate (2) can be moved with respect to the lower pressing plate (1) by means of at least one actuator, and heating devices (4) are arranged in both pressing plates (1, 2) and/or in a number of parts of the multi-part pressing plates (1, 2), **characterised in that** the strip contact faces of the pressing plates (1, 2) are provided with a protective cover (5, 6).

8. Device according to claim 7, **characterised in that** the protective cover (5, 6) consists of a heat-resistant fabric strip.

9. Device according to claim 7 or 8, **characterised in that** winding rolls (7, 8) are mounted at the ends of the pressing plates (1, 2) in each case on the entry side and on the exit side, from which the protective cover (5, 6) can be unwound and onto which the protective cover (5, 6) can be wound.

10. Device according to claim 9, **characterised in that** deflection rolls are arranged at the ends of the pressing plates (1, 2) in each case on the entry side and on the exit side, around which the protective cover (5, 6) is guided such that it revolves endlessly.

11. Device according to one of claims 7 to 10, **characterised in that** the actuator is a working cylinder (3).

12. Device according to one of claims 7 to 11, **characterised in that** induction coils are provided as heating devices (4).

## Revendications

1. Procédé de traitement amélioratif en continu de feuillards d'acier, le matériau en bandes (10) étant réchauffé jusqu'à une température de durcissement afin d'être durci, pour être ensuite trempé, puis lissé mécaniquement avec réchauffage simultané, et réchauffé jusqu'à une température de revenu, **caractérisé par le fait que**, durant le lissage, le matériau en bandes (10) est réchauffé rapidement jusqu'à la température de revenu et, dans la continuité directe dudit lissage, il est maintenu à la température de revenu pour être ensuite refroidi définitivement ; et **par le fait que** la surface du feuillard (10) est recouverte d'un revêtement protecteur (5, 6) au cours du lissage, en vue d'une protection contre une détérioration mécanique.

2. Procédé selon la revendication 1, **caractérisé par le fait que**, durant le lissage, le matériau en bandes (10) est chauffé jusqu'à la température de revenu avec un gradient de chauffage d'au moins 500 K/s.

3. Procédé selon l'une des revendications 1 ou 2, **caractérisé par le fait que** le matériau en bandes (10) est chauffé de haut en bas et/ou de bas en haut au cours du lissage.

4. Procédé selon l'une des revendications 1 à 3, **caractérisé par le fait que** le feuillard (10) est réchauffé jusqu'à la température de revenu au début du lissage, et est maintenu à cette température de revenu lors de la poursuite dudit lissage.

5. Procédé selon l'une des revendications 1 à 4, **caractérisé par le fait que** le lissage est exécuté sous atmosphère de gaz protecteur.

6. Procédé selon l'une des revendications 1 à 5, **caractérisé par le fait que** le réchauffage du feuillard (10) a lieu en mode inductif.

7. Dispositif pour la mise en oeuvre du procédé selon l'une des revendications 1 à 6, équipé d'un dispositif de lissage comprenant une plaque inférieure de lissage (1) en une ou plusieurs partie(s), et une plaque supérieure de lissage (2) en une ou plusieurs partie(s), lesdites plaques délimitant entre elles un interstice de défilement du feuillard (10), sachant que la plaque supérieure de lissage (2) peut être déplacée vers la plaque inférieure de lissage (1) à l'aide d'au moins un organe de réglage, et que des systèmes de chauffage (4) sont intégrés dans les deux plaques de lissage (1, 2) et/ou dans plusieurs parties desdites plaques de lissage (1, 2) en plusieurs parties, **caractérisé par le fait que** les surfaces desdites plaques de lissage (1, 2), en contact avec le feuillard, sont pourvues d'un revêtement protecteur (5, 6).

8. Dispositif selon la revendication 7, **caractérisé par le fait que** le revêtement protecteur (5, 6) est constitué d'une bande tissée thermiquement résistante.

9. Dispositif selon la revendication 7 ou 8, **caractérisé par le fait que** des cylindres enrouleurs (7, 8) sont retenus aux extrémités des plaques de lissage (1, 2), respectivement du côté entrée et du côté sortie, cylindres dont le revêtement protecteur (5, 6) peut être dévidé, et sur lesquels ledit revêtement protecteur (5, 6) peut être enroulé.

10. Dispositif selon la revendication 9, **caractérisé par le fait que** des rouleaux de renvoi sont disposés aux extrémités des plaques de lissage (1, 2), respectivement du côté entrée et du côté sortie, rouleaux autour desquels le revêtement protecteur (5, 6) est guidé avec révolution sans fin.

11. Dispositif selon l'une des revendications 7 à 10, **caractérisé par le fait que** l'organe de réglage est un vérin de travail (3).

12. Dispositif selon l'une des revendications 7 à 11, **caractérisé par le fait que** des bobines à induction sont prévues en tant que systèmes de chauffage (4).
